# EUROPÄISCHE PATENTSCHRIFT

(11) **EP 1 804 162 B1**
(45) Veröffentlichungstag und Bekanntmachung des Hinweises auf die Patenterteilung: **04.05.2016**
(21) Anmeldenummer: 06026472.8
(22) Anmeldetag: 20.12.2006
(51) Int. Cl.: G06F 9/44

(54) **Verfahren zum Konfigurieren eines netzwerkeingebundenen Datenverarbeitungsgeräts sowie netzwerkeingebundenes Datenverarbeitungsgerät**
Method for configuring a network integrated data processing device and a network integrated data processing device
Procédé destiné à la configuration d'un appareil de traitement de données lié à un réseau tout comme appareil de traitement des données lié à un réseau

(30) Priorität: 27.12.2005 DE 102005062513
(43) Veröffentlichungstag der Anmeldung: 04.07.2007
(73) Patentinhaber: Vodafone GmbH, 40549 Düsseldorf (DE)
(72) Erfinder: Foley, Peter, St. Albans, AL3 5LG (GB); Fehnert, Ben, London, SW9 9TD (GB)
(74) Vertreter: Müller, Thomas

(56) Entgegenhaltungen:
- EP-A- 1 331 559
- WO-A-99/61983
- US-A- 5 689 668
- US-A1- 2005 059 393

## Beschreibung

Die vorliegende Erfindung bezieht sich auf ein Verfahren zum Konfigurieren eines in einem Mobilfunknetzwerk eingebundenen Mobiltelefons, insbesondere mittels eines Assistenten im Netzwerk (Konfigurationsrechner), gemäß dem Oberbegriff von Patentanspruch 1.

Stand der Technik bei der Konfiguration von Datenverarbeitungsgeräten ist, dass innerhalb des Gerätes ein oder mehrere Konfigurationsprogramme lauffähig sind, mit deren Hilfe man Konfigurationsparameter einstellen kann, welche in bestimmten Systemdateien oder Datenbanken gespeichert werden, um beim Starten des Datenverarbeitungsgerätes und/oder während des Betriebs dem Betriebssystem und unter dem Betriebssystem laufenden Anwenderprogrammen zur Verfügung zu stehen. Mittels der Konfiguration kann die Gestaltung des so genannten Desktop ebenso bewerkstelligt werden wie Verbindungsaufnahmen zu anderen Datenverarbeitungsgeräten oder Benutzereinstellungen.

Eine Schwierigkeit kann darin bestehen, netzwerkeingebundene Datenverarbeitungsgeräte, beispielsweise Mobiltelefone, die etwa dem GSM-Standard genügen, zu konfigurieren, da aufgrund der Abhängigkeit von außerhalb des Datenverarbeitungsgerätes befindlichen Diensten eine Konfiguration in Abhängigkeit von einer Netzwerkumgebung vorgenommen werden muss. Hier müssen mithin bei der Konfiguration Daten aus dem Netzwerk beschafft und berücksichtigt werden. Ein weiteres Problem tritt gerade bei kleinen Mobilgeräten, wie Mobiltelefonen, dahingehend auf, dass aufgrund der starken Beschränkung des zur Verfügung stehenden Speicherplatzes für Programme nicht alle erdenklichen Konfigurationsoptionen, wie beispielsweise Bildschirmhintergründe, speziell gewünschte Programme oder komplexere Dienste, vorab vor dem Verkauf des Gerätes auf demselben gespeichert werden können. Vielmehr muss eine Auswahl während der Konfiguration getroffen werden und die noch nicht vorhandenen Daten müssen gegebenenfalls über das Netzwerk auf das zu konfigurierende Datenverarbeitungsgerät herunter geladen werden.

Bislang musste der Anwender verschiedene Konfigurationsassistenten und - programme verwenden, um die verschiedenen Aspekte seines Datenverarbeitungsgeräts konfigurieren zu können, was zu häufigen Verbindungsaufnahmen mit dem Netzwerk und mitunter zu Abstimmungsproblemen zwischen einzelnen Komponenten führte. Zudem hat ein Netzwerkbetreiber aufgrund der vom Endanwender im Datenverarbeitungsgerät vorgenommenen Konfiguration keinen Überblick über die aktuelle Konfiguration der einzelnen im Netzwerk befindlichen Datenverarbeitungsgeräte.

In der WO 99/61983 A3, von der die vorliegende Erfindung ausgeht, ist eine Lösung beschrieben, mit der bestehende Funktionen in einem Mobiltelefon geändert, ersetzt oder neu implementiert werden können. Beispielsweise kann mit der bekannten Lösung ein Programm auf ein Mobiltelefon geladen werden, wenn dies vom Nutzer angefordert wird. Dazu wird eine Verbindung zwischen dem Mobiltelefon, auf den das Programm geladen werden soll, mit einem Server hergestellt, auf dem sich herunterladbare Programme befinden. Anschließend wird der Typus des Mobiltelefons identifiziert, damit herausgefunden werden kann, welche der bestehenden Programme für das Mobiltelefon geeignet sind. Falls angebracht, kann der Nutzer das Programm auswählen, welches heruntergeladen werden soll. Basierend auf den Identifikationsmerkmalen des Mobiltelefons und auf dem gewünschten Programm wird dann eine geeignete Programmvariante auf das Mobiltelefons übertragen.

Es ist die Aufgabe der vorliegenden Erfindung, einen Ansatz bereitzustellen, mit dessen Hilfe eine einheitliche, Netzwerk-übergreifende Konfiguration bei vollständiger Kontrolle durch den Netzwerkbetreiber von netzwerkeingebundenen Datenverarbeitungsgeräten möglich ist.

Diese Aufgabe wird durch das Konfigurationsverfahren mit den Merkmalen gemäß dem unabhängigen Patentanspruch 1 gelöst. Weitere vorteilhafte Details, Ausgestaltungen und Aspekte der vorliegenden Erfindung ergeben sich aus den abhängigen Patentansprüchen und der Beschreibung.

Der Erfindung liegt die Idee zugrunde, ein Konfigurations-Frontend auf dem Datenverarbeitungsgerät bereitzustellen, dem ein leistungsfähiges Konfigurations-Backend auf einem Konfigurationsserver zur Seite steht.

Dementsprechend ist die Erfindung in einem ersten Aspekt gerichtet auf ein Verfahren zum Konfigurieren eines in einem Mobiltelefonnetzwerk eingebundenen Mobiltelefons, mit den Schritten
a) Darstellen von Konfigurationsoptionen, bei denen es sich um Möglichkeiten zur Konfiguration des Mobiltelefon handelt, auf einer Anzeige des Mobiltelefons;
b) Feststellen von durch einen Benutzer optierten Konfigurationen im Mobiltelefon;
c) Erstellen eines Konfigurationsprofils aus allen festgestellten optierten Konfigurationen im Mobiltelefon;
d) Übersenden des gebündelten Konfigurationsprofils vom Mobiltelefon an einen Konfigurationsrechner im Mobiltelefonnetzwerk;
e) Erstellen von für die Konfiguration erforderlichen Daten im Konfigurationsrechner;
f) Übertragen der Daten vom Konfigurationsrechner an das Mobiltelefon und/oder an Diensterechner im Mobiltelefonnetzwerk;
g) Einrichten des Mobiltelefons und/oder des Dienstrechners anhand der empfangenen Daten.

Das Verfahren ist gekennzeichnet durch folgende Schritte:
h) Erfassen von Benutzeraktionen im Normalbetrieb des Mobiltelefons;
i) Übersenden der Benutzeraktionen, optional in prozessierter Form, an den Konfigurationsrechner;
j) Erstellen eines Konfigurationsprofils mit modifizierten Voreinstellungen durch den Konfigurationsrechner anhand eines Systems zur Analyse von Benutzeraktionen;
k) Erstellen von für die modifizierte Konfiguration erforderlichen Daten;
l) Übertragen der Daten an das Mobiltelefon und/oder an Diensterechner im Mobiltelefonnetzwerk; und
m) Modifizieren der Einrichtung des Mobiltelefons anhand der Daten.

Ein netzwerkeingebundenes Datenverarbeitungsgerät im Sinne der vorliegenden Erfindung ist jegliches Datenverarbeitungsgerät, welches zu seiner vollständigen Funktion ein zugehöriges Netzwerk mit weiteren gleichen oder anders gearteten Geräten erfordert. Erfindungsgemäß ist das Datenverarbeitungsgerät ein Mobiltelefon. Unter Konfigurationsoptionen sind die Möglichkeiten zur Konfiguration des Datenverarbeitungsgeräts zu verstehen, wobei diese entweder in einer aufbereiteten Form (Anwahlschaltflächen, Ausklappmenüs und dergleichen) oder als vom Benutzer eingebbare Optionen ausgeführt sein können. Diese werden auf einer Anzeige des Datenverarbeitungsgerätes dargestellt, wobei die Anzeige jede üblicherweise im Stand der Technik für Datenverarbeitungsgeräte verwendete Anzeige sein kann, beispielsweise eine Flüssigkristallanzeige, eine Anzeige aus (organischen) Licht emittierenden Dioden ((O)LED), oder dergleichen.

Unter "optierten Konfigurationen" versteht man die vom Benutzer ausgewählten oder eingegebenen oder sonst wie dem Datenverarbeitungsgerät bekannt gemachten, gewünschten Konfigurationen. Erfindungsgemäß werden diese durch das Verfahren festgestellt und aus den festgestellten Konfigurationen ein alle Konfigurationsoptionen umfassendes Konfigurationsprofil erstellt. Das Konfigurationsprofil ist eine in einer bestimmten Weise formatierte Darstellung der vom Anwender gewollten, ausgewählten beziehungsweise optierten Konfigurationen für die verschiedenen konfigurierbaren Aspekte seines Datenverarbeitungsgeräts.

Das gebündelte Konfigurationsprofil wird gemäß der Erfindung dann an einen Konfigurationsrechner über das Netzwerk gesendet. Eine Konfiguration des zu konfigurierenden Datenverarbeitungsgeräts findet noch nicht statt. Vielmehr wird im nächsten Verfahrensschritt aufgrund der im Konfigurationsprofil enthaltenen Informationen über die vorzunehmenden Konfigurationen ein Satz von Daten erstellt, welcher für die Konfiguration des Datenverarbeitungsgerätes nötig ist. Die zusammengestellten, für die Konfiguration erforderlichen Daten werden dann an das Datenverarbeitungsgerät und/oder an Diensterechner im Netzwerk gesendet. Auf diese Weise ist es möglich, zusätzliche, auf dem Datenverarbeitungsgerät zunächst nicht befindliche Daten, die für die gewünschte Konfiguration notwendig sind, dem Datenverarbeitungsgerät bereitzustellen und gegebenenfalls für die Interaktion des Datenverarbeitungsgeräts über bestimmte im Netzwerk angebotene Dienste erforderlichen Daten beziehungsweise Einrichtungen auf den Dienst oder die, Dienste anbietenden, Diensterechner zu übertragen. Im Datenverarbeitungsgerät und gegebenenfalls im Diensterechner wird nunmehr eine Einrichtung anhand der empfangenen Daten sowie gegebenenfalls des erstellten Konfigurationsprofils vorgenommen, um die vom Anwender gewünschte Konfiguration auf dem Datenverarbeitungsgerät zu etablieren.

Vorzugsweise beinhalten die Konfigurationsoptionen eine Auswahl verwendbarer Programme, aus denen der Benutzer die von ihm präferierten Programme auswählen kann, wobei die Konfiguration ein Menü mit den ausgewählten Programmen zum Starten der Programme beinhaltet und/oder das Übertragen der Daten das Übertragen von vom Benutzer ausgewählten Programmen umfasst. Verschiedene Programme können nicht unbedingt in der Standardkonfiguration von Datenverarbeitungsgeräten enthalten sein und müssen daher nachträglich über das Netzwerk herunter geladen werden. Informationen dazu können daher während der Darstellung der Konfigurationsoptionen (auch dynamisch nach Abfrage verfügbarer Programme über das Netzwerk) dargestellt werden, so dass der Benutzer diejenigen Programme, die er einzusetzen wünscht, aus dem Netz automatisch herunterladen kann. Zusätzlich kann vorgesehen sein, dass ein Menü mit den ausgewählten Programmen im Konfigurationsrechner vorbereitet wird, zu dem der Benutzer gelangen kann, um dann bedarfsweise eines der Programme zu starten. Hierbei kann auch die Erstellung des Menüs, die programmtechnisch ebenfalls als ein Datenobjekt aufzufassen ist, im Konfigurationsrechner erfolgen, um beispielsweise das Datenverarbeitungsgerät von dieser Aufgabe zu entlasten.

Zusätzlich oder alternativ können die Konfigurationsoptionen in bevorzugter Weise eine Auswahl von Gestaltungsoptionen umfassen, aus denen der Benutzer die von ihm präferierten Gestaltungen auswählen kann, wobei die Konfiguration das Aktivieren der Gestaltungen umfasst und/oder das Übertragen von für die präferierten Gestaltungen notwendigen Daten umfasst. Gestaltungsoptionen der vorliegenden Erfindung sind alle Möglichkeiten, die graphische Benutzeroberfläche des Datenverarbeitungsgerätes zu beeinflussen, beispielsweise Bildschirmhintergründe, Farbauswahl, so genannte Gestaltungsoptionen zur Veränderung der Bedienelemente der Fenster der graphischen Oberfläche, Startsequenzen, Menüdarstellungen, Benachrichtigungstöne für Aktivitäten des Datenverarbeitungsgeräts und dergleichen. Diese können jeweils einzeln, oder aber in jeder beliebigen Kombination realisiert sein. Zur Konfiguration werden dann die jeweils gewünschten Darstellungsoptionen innerhalb des Datenverarbeitungsgerätes aktiviert, und es werden bedarfsweise die für das Realisieren der Darstellungsoptionen erforderlichen zusätzlichen Daten vom Konfigurationsrechner übersandt.

Die Konfigurationsoptionen können vorzugsweise auch eine Auswahl von Netzwerkdiensten umfassen, aus denen der Benutzer die von ihm präferierten Dienste auswählen kann, wobei die Konfiguration das Aktivieren der Dienste umfasst und/oder das Übertragen von Daten das Übertragen der Dienstedaten einmalig oder periodisch umfasst.

Dabei können diese Netzwerkdienste vorteilhaft Netzverbindungsarten und/oder Informationsdienste umfassen. Unter Netzwerkverbindungsarten ist beispielsweise die Auswahl von Übertragungsprotokollen zur Verbindung mit dem Netzwerk, wie zum Beispiel WLAN, Bluetooth oder Ethernet, oder andererseits im Telefoniebereich GPRS, oder HSTP oder UMTS zu verstehen. Informationsdienste andererseits als spezielles Beispiel für Netzwerkdienste beschäftigen sich nicht mit der eigentlichen physikalischen Übertragung der Daten, sondern stellen auf einer höheren Ebene Dienste zur Informationsgewinnung zur Verfügung, beispielsweise Maildienste, Wetterberichte oder "Location based"-Dienste, wie den aktuellen Standort oder in der Umgebung verfügbare Dienstleistungen (Restaurants, Tankstellen und dergleichen).

Um eine übersichtliche Anwendung des Darstellungsschrittes zu ermöglichen, wird es weiterhin bevorzugt, dass die Konfigurationsoptionen hierarchisch gegliedert sind und nach Auswählen einer Konfigurationsoption auf höherer Ebene die dieser Konfigurationsoption höherer Ebene zugegliederten Konfigurationsoptionen nächstniedrigerer Ebene angezeigt werden. Auf diese Weise ist es möglich, die verschiedenen und mitunter zahlreichen Konfigurationsmöglichkeiten eines Datenverarbeitungsgeräts zu strukturieren und damit übersichtlicher und gerade bei kleinen Bildschirmen in vorteilhafter Weise darstellbar zu machen.

Ein weiterer Ansatz, die Informationen für die Konfigurationsoptionen, gerade auf kleinen Bildschirmen, unterzubringen, besteht darin, nur eine Teilmenge der Konfigurationsoptionen auf der Anzeige des Datenverarbeitungsgerätes gleichzeitig darzustellen, wobei diese Teilmenge durch Scroll-Anweisungen des Benutzers scrollbar sind. Unter einer Scroll-Anweisung versteht man eine Benutzereingabe, die das Konfigurationsoptionen darstellende Programmobjekt dazu veranlasst, die Darstellung der Konfigurationsoptionen so zu verschieben, dass zumindest eine bislang nicht angezeigte Konfigurationsoption und eventuell mehrere (je nach Eingabe des Anwenders) anzuzeigen, während zumindest eine bislang angezeigte Konfigurationsoption nicht mehr angezeigt wird. Der Vorgang des Durchscrollens von Fenstern ist Fachleuten geläufig und die entsprechenden Programmvorgänge sind bekannt beziehungsweise in herkömmlichen Systemen bereits implementiert.

Wie bereits ausgeführt, können die Konfigurationsoptionen in verschiedener Weise dargestellt werden. In einer bevorzugten Ausführungsform des erfindungsgemäßen Verfahrens sind die Konfigurationsoptionen als Auswahlflächen auf der Anzeige dargestellt, die durch Anklicken oder Bewegen eines Cursors und Betätigen einer Taste aktiviert werden können, während in einer anderen, auch gleichzeitig möglichen, bevorzugten Ausführungsform die Konfigurationsoptionen als Eingabefelder für Benutzereingaben dargestellt werden, so dass der Anwender hier frei die Konfiguration, die für ihn gewünscht ist, eintragen kann.

In den bisherigen Ausführungsformen der Erfindung wird die Konfiguration wahlweise beispielsweise beim erstmaligen Inbetriebnehmen des Datenverarbeitungsgeräts oder durch Anstoßen eines entsprechenden Konfigurationsprogramms bewirkt. Es wird eine Konfiguration erzeugt, die bis zum nächsten Starten des Konfigurationsprogramms unverändert bleibt. Es ist jedoch ebenfalls möglich, den Prozess der Konfiguration des Gerätes zu dynamisieren.

Erfindungsgemäß erfolgt dies durch die weiteren erfindungsgemäßen Verfahrensschritte:
h) Erfassen von Benutzerinteraktionen im Normalbetrieb des Datenverarbeitungsgeräts;
i) Übersenden der Benutzeraktionen, optional in prozessierter Form an den Konfigurationsrechner;
j) Erstellen eines Konfigurationsprofils mit modifizierten Voreinstellungen durch den Konfigurationsrechner anhand eines Systems zur Analyse von Benutzerinteraktionen;
k) Erstellen von für die modifizierte Konfiguration erforderlichen Daten;
l) Übertragen der Daten an das Datenverarbeitungsgerät und/oder an Diensterechner im Netzwerk; und
m) Modifizieren der Einrichtung des Datenverarbeitungsgeräts anhand der Daten.

Vorteilhaft können die Schritte h) bis j) in vorgegebenen Zeitabständen oder ereignisabhängig wiederholt werden und die Schritte k) bis m) ausgeführt werden, wenn die Konfiguration sich gegenüber einer zuvor festgestellten Konfiguration verändert hat.

In den Schritten h) bis k) wird eine Überwachung des Datenverarbeitungsgeräts im so genannten Normalbetrieb vorgenommen, wobei unter einem Normalbetrieb ein Nicht-Konfigurationsbetrieb, also eine zweckgemäße Verwendung des Datenverarbeitungsgerätes zu verstehen ist. Im Normalbetrieb führt der Benutzer keine expliziten Konfigurationsmaßnahmen durch, sondern das Verfahren muss durch Berücksichtigung der Verwendung des Gerätes durch den Benutzer feststellen, ob der Benutzer möglicherweise tatsächlich lieber eine von der bisherigen Konfiguration abweichende Konfiguration verwenden möchte. Beispielsweise kann das Datenverarbeitungsgerät auf ein bestimmtes Übertragungsprotokoll, zum Beispiel GPRS, voreingestellt sein, es wird jedoch festgestellt, dass der Benutzer im Betrieb sehr oft zum Verbindungsaufbau auf ein anderes Protokoll, zum Beispiel UMTS, umschaltet. Erfindungsgemäß erfolgt die Auswertung der Benutzerinteraktion anhand der Benutzeraktionen, optional in prozessierter Form, im Konfigurationsrechner (welcher derselbe Rechner sein kann, der auch im ersten Aspekt der Erfindung verwendet wird), um die Ressourcen des zu konfigurierenden Datenverarbeitungsgerätes zu schonen. Es versteht sich jedoch, dass die Analyse, das heißt Schritt j), auch im Datenverarbeitungsgerät selbst durchgeführt werden kann. Die Schritte k) bis m) entsprechen im Prinzip den Schritten e) bis g) des erfindungsgemäßen Verfahrens, mit dem Unterschied, dass sie nicht durch den Start des Verfahrens und das Herstellen von Konfigurationsdaten angestoßen werden, sondern lediglich bei geändertem Konfigurationsprofil ausgeführt werden müssen, was in einer bevorzugten Ausführungsform auch lediglich dann der Fall ist.

Erfindungsgemäß wird das Verfahren in einem Mobiltelefonnetzwerk durchgeführt. In diesem Fall handelt es sich bei den Datenverarbeitungsgeräten um Mobiltelefone.

In einem weiteren Aspekt wird ein netzwerkeingebundenes Datenverarbeitungsgerät beschrieben, das folgende Bestandteile aufweist:
- Darstellungsmittel zum Darstellen von Konfigurationsoptionen auf einer Anzeige des Datenverarbeitungsgeräts,
- Auswertungsmittel zum Feststellen von durch einen Benutzer optierten Konfigurationen;
- Profilierungsmittel zum Erstellen eines Konfigurationsprofils aus den festgestellten Konfigurationen;
- Übertragungsmittel zum Übersenden des Konfigurationsprofils an einen Konfigurationsrechner im Netzwerk;
- Empfangsmittel zum Empfangen von für die Konfiguration erforderlichen Daten; und
- Konfigurationsmittel zum Einrichten des Datenverarbeitungsgeräts anhand der empfangenen Daten.

Die verschiedenen zur Ausführung der einzelnen Schritte hier angegebenen Mittel können entweder durch konkrete elektronische Schaltungen oder sonstige Hardwaremittel implementiert werden oder durch Programmobjekte, welche die Funktionalität implementieren und die auf einem Prozessor des Datenverarbeitungsgerätes ablauffähig sind. Es versteht sich, dass programmtechnisch oder bei Hardwareimplementation mehrere der genannten Funktionsmittel zu einheitlichen Aufbaus zusammengefasst werden können. Somit ist ein weiterer Aspekt ein Datenverarbeitungsgerät, auf dem Programmobjekt gespeichert und ausführbar sind, welche die Mittel des Datenverarbeitungsgeräts implementieren.

Vorzugsweise weist das Datenverarbeitungsgerät Mittel zur Durchführung des wie vorstehend beschriebenen erfindungsgemäßen Verfahrens auf.

In einer bevorzugten Ausführungsform ist das Darstellungsmittel zur Darstellung von verwendbaren Programmen bestimmt und eingerichtet, auf dem der Benutzer die von ihm präferierten Programme auswählen kann, wobei die Konfiguration ein Menü mit den ausgewählten Programmen zum Starten der Programme beinhaltet und/oder das Übertragungsmittel zum Übertragen von vom Benutzer ausgewählten Programmen bestimmt ist.

Des Weiteren ist vorzugsweise das Darstellungsmittel zur Darstellung von Gestaltungsoptionen bestimmt und eingerichtet, aus denen der Benutzer die von ihm präferierten Gestaltungen auswählen kann, wobei die Konfiguration das Aktivieren der Gestaltungen umfasst und/oder das Übertragungsmittel zum Übertragen von für die präferierten Gestaltungen notwendigen Daten bestimmt ist.

In einer weiteren bevorzugten Ausführungsform umfassen die Gestaltungsoptionen, die das Darstellungsmittel darstellen kann, einen Bildschirmhintergrund, eine Menüdarstellung und Benachrichtigungstöne für Aktivitäten des Datenverarbeitungsgerätes, aber auch andere oben genannte Gestaltungsoptionen.

Weiterhin kann das Darstellungsmittel zur Darstellung einer Auswahl von Netzwerkdiensten bestimmt und eingerichtet sein, aus denen der Benutzer die von ihm präferierten Dienste auswählen kann, wobei die Konfiguration das Aktivieren der Dienste umfasst und/oder das Übertragungsmittel zum Übertragen der Dienstedaten einmalig oder periodisch bestimmt ist.

Schließlich kann das Datenverarbeitungsgerät dadurch gekennzeichnet sein, dass die Netzwerkdienste Netzwerkverbindungsarten und/oder Informationsdienste umfassen.

Die Konfigurationsoptionen können hierarchisch gegliedert sein und nach Auswählen einer Konfigurationsebene höherer Ebene kann das Darstellungsmittel die dieser Konfigurationsoption höherer Ebene zugegliederten Konfigurationsoptionen nächstniedrigerer Ebene anzeigen oder zeigt diese an. Es ist ebenfalls möglich, dass nur eine Teilmenge der Konfigurationsoptionen auf der Anzeige gleichzeitig dargestellt wird und diese Teilmenge durch Scrollanweisungen des Benutzers scrollbar ist.

Das Datenverarbeitungsgerät ist vorzugsweise ein Mobiltelefon.

Alles bezüglich des erfindungsgemäßen Verfahrens Gesagte gilt gleichermaßen für das netzwerkeingebundene Datenverarbeitungsgerät und umgekehrt, so dass jeweils wechselweise Bezug genommen wird.

Die Erfindung stellt ein Verfahren und Datenverarbeitungsgerät bereit, bei dem das Datenverarbeitungsgerät von der komplexen Aufgabe der Konfiguration weitgehend entbunden ist und insbesondere weniger Daten auf dem Datenverarbeitungsgerät vorgehalten werden müssen, die für eine Konfiguration möglicherweise notwendig sind. Zudem behält der Netzwerkbetreiber eine stärkere Kontrolle über die Konfiguration der einzelnen Konfigurationselemente, da er beispielsweise im Konfigurationsrechner entscheiden kann, dass bestimmte, vom Benutzer optierte Konfigurationen nicht zur Verfügung stehen und diese damit blockiert werden.

## Patentansprüche

1. Verfahren zum Konfigurieren eines in einem Mobiltelefonnetzwerk eingebundenen Mobiltelefons, mit den Schritten
a) Darstellen von Konfigurationsoptionen, bei denen es sich um Möglichkeiten zur Konfiguration des Mobiltelefon handelt, auf einer Anzeige des Mobiltelefons;
b) Feststellen von durch einen Benutzer optierten Konfigurationen im Mobiltelefon;
c) Erstellen eines Konfigurationsprofils aus allen festgestellten optierten Konfigurationen im Mobiltelefon;
d) Übersenden des gebündelten Konfigurationsprofils vom Mobiltelefon an einen Konfigurationsrechner im Mobiltelefonnetzwerk;
e) Erstellen von für die Konfiguration erforderlichen Daten im Konfigurationsrechner;
f) Übertragen der Daten vom Konfigurationsrechner an das Mobiltelefon und/oder an Diensterechner im Mobiltelefonnetzwerk;
g) Einrichten des Mobiltelefons und/oder des Dienstrechners anhand der empfangenen Daten; **gekennzeichnet durch** folgende Schritte:
h) Erfassen von Benutzeraktionen im Normalbetrieb des Mobiltelefons;
i) Übersenden der Benutzeraktionen, optional in prozessierter Form, an den Konfigurationsrechner;
j) Erstellen eines Konfigurationsprofils mit modifizierten Voreinstellungen **durch** den Konfigurationsrechner anhand eines Systems zur Analyse von Benutzeraktionen;
k) Erstellen von für die modifizierte Konfiguration erforderlichen Daten;
l) Übertragen der Daten an das Mobiltelefon und/oder an Diensterechner im Mobiltelefonnetzwerk; und
m) Modifizieren der Einrichtung des Mobiltelefons anhand der Daten.

2. Verfahren nach Anspruch 1, **dadurch gekennzeichnet, dass** die Konfigurationsoptionen eine Auswahl verwendbarer Programme umfassen, aus denen der Benutzer die von ihm präferierten Programme auswählen kann, wobei die Konfiguration ein Menu mit den ausgewählten Programmen zum Starten der Programme beinhaltet und/oder das Übertragen der Daten das Übertragen von vom Benutzer ausgewählten Programmen umfasst.

3. Verfahren nach Anspruch 1 oder 2, **dadurch gekennzeichnet, dass** die Konfigurationsoptionen eine Auswahl von Gestaltungsoptionen umfassen, aus denen der Benutzer die von ihm präferierten Gestaltungen auswählen kann, wobei die Konfiguration das Aktivieren der Gestaltungen umfasst und/oder das Übertragen von Daten das Übertragen von für die präferierten Gestaltungen notwendigen Daten umfasst.

4. Verfahren nach einem der Ansprüche 1 bis 3, **dadurch gekennzeichnet, dass** die Konfigurationsoptionen eine Auswahl von Netzwerkdiensten umfassen, aus denen der Benutzer die von ihm präferierten Dienste auswählen kann, wobei die Konfiguration das Aktivieren der Dienste umfasst und/oder das Übertragen von Daten das Übertragen der Dienstedaten einmalig oder periodisch umfasst.

5. Verfahren nach einem der Ansprüche 1 bis 4, **dadurch gekennzeichnet, dass** die Konfigurationsoptionen hierarchisch gegliedert sind und nach Auswählen einer Konfigurationsoption höherer Ebene die dieser Konfigurationsoption höherer Ebene zugegliederten Konfigurationsoptionen nächstniedrigerer Ebenen angezeigt werden.

6. Verfahren nach einem der Ansprüche 1 bis 5, **dadurch gekennzeichnet, dass** nur eine Teilmenge der Konfigurationsoptionen auf der Anzeige des Mobiltelefons gleichzeitig dargestellt wird und diese Teilmenge durch Scrollanweisungen des Benutzers scrollbar ist.

7. Verfahren nach einem der Ansprüche 1 bis 6, **dadurch gekennzeichnet, dass** die Konfigurationsoptionen als Auswahlflächen auf der Anzeige und/oder als Eingabefelder für Benutzereingaben dargestellt werden.

## Claims

1. A method for configuring a mobile phone, said mobile phone being integrated in a mobile telecommunications network, comprising the steps of:
a) Displaying configuration options, which are options for the configuration of said mobile phone, on a display of said mobile phone;
b) Detecting options, which have been opted by a user, in the mobile phone;
c) Creating a configuration profile from all of the detected opted configurations in the mobile phone;
d) Submitting the bundled configuration profile from the mobile phone to a configuration computer in the mobile telecommunications network;
e) Creating data in the configuration computer, which are required for the configuration;
f) Submitting the data from the configuration computer to the mobile phone and/or to a service computer in the mobile telecommunications network;
g) Getting up the mobile phone and/or the service computer on the basis of the received data; **characterized by** the following steps:
h) Detecting user actions in the normal operation mode of the mobile phone;
i) Submitting of the user actions, optionally in processed form, to the configuration computer;
j) Creating a configuration profile with modified pre-settings by means of the configuration computer by the aid of a system for the analysis of user actions;
k) Creating data which are necessary for the modified configuration;
l) Transmitting the data to the mobile phone and/or to the service computer in the mobile telecommunications network; and
m) Modifying the setup of the mobile phone based on said data.

2. The method according to claim 1, **characterized in that** the configuration options comprise a selection of usable programs, from which the user can select the programs which are preferred by him, wherein the configuration comprises a menu with the selected programs for starting the programs and/or wherein transmitting the data comprises the transmission of the programs which have been selected by the user.

3. The method according to claim 1 or 2, **characterized in that** the configuration options comprise a selection of design options, from which the user can select the designs which are preferred by him, wherein the configuration comprises the activation of the designs and/or wherein transmitting the data comprises the transmission of said data, which are necessary for the preferred design.

4. The method according to anyone of claims 1 to 3, **characterized in that** the configuration options comprise a selection of network services, from which the user can select the services which are preferred by him, wherein the configuration comprises the activation of said services and/or wherein transmitting the data comprises the singular or periodical transmission of the service data.

5. The method according to anyone of claims 1 to 4, **characterized in that** the configurations options are hierarchically structured and that after selecting a configuration option of a higher level, configuration options of the next lower level are displayed, which are affiliated to this configuration option of higher level.

6. The method according to anyone of claims 1 to 5, **characterized in that** only a subset of the configuration options is presented on the display of the mobile phone at the same time and that this subset is scrollable by the user by means of scroll instructions.

7. The method according to anyone of claims 1 to 6, **characterized in that** the configuration options are displayed as selection areas on the display and/or as input fields for user inputs.

## Revendications

1. Procédé destiné à la configuration d'un téléphone mobile intégré dans un réseau de téléphonie mobile, avec les étapes de
a) représentation des options de configuration, quant auxquelles il s'agit de possibilités de configuration du téléphone mobile, sur un affichage du téléphone mobile ;
b) détermination des configurations adoptées par un utilisateur dans le téléphone mobile ;
c) création d'un profil de configuration à partir de toutes les configurations déterminées adoptées dans le téléphone mobile ;
d) transfert du profil de configuration combiné par le téléphone mobile à un calculateur de configuration dans le réseau de téléphonie mobile ;
e) création de données nécessaires à la configuration dans le calculateur de configuration ;
f) transmission des données par le calculateur de configuration au téléphone mobile et/ou à un calculateur de prestataire de services dans le réseau de téléphonie mobile ;
g) organisation du téléphone mobile et/ou du calculateur de prestataire de services à l'aide des données reçues ;
**caractérisé par** les étapes suivantes :
h) détection d'actions d'utilisateur dans le fonctionnement normal du téléphone mobile ;
i) transfert des actions d'utilisateur, en option sous une forme traitée, au calculateur de configuration ;
j) création d'un profil de configuration avec des préréglages modifiés par le calculateur de configuration à l'aide d'un système servant à l'analyse des actions d'utilisateur ;
k) création de données nécessaires à la configuration modifiée ;
1) transmission des données au téléphone mobile et/ou au calculateur de prestataire de services dans le réseau de téléphonie mobile ; et
m) modification de l'organisation du téléphone mobile à l'aide des données.

2. Procédé selon la revendication 1, **caractérisé en ce que** les options de configuration comportent une sélection de programmes utilisables parmi lesquels l'utilisateur peut sélectionner ses programmes préférés, dans lequel la configuration contient un menu avec les programmes sélectionnés pour le démarrage des programmes et/ou la transmission des données comprend la transmission des programmes sélectionnés par l'utilisateur.

3. Procédé selon la revendication 1 ou 2, **caractérisé en ce que** les options de configuration comportent une sélection d'options d'agencement parmi lesquelles l'utilisateur peut sélectionner ses agencements préférés, dans lequel la configuration comporte l'activation des agencements et/ou la transmission des données comporte la transmission de données nécessaires aux agencements préférés.

4. Procédé selon l'une quelconque des revendications 1 à 3, **caractérisé en ce que** les options de configuration comportent une sélection de services de réseau parmi lesquels l'utilisateur peut sélectionner ses services préférés, dans lequel la configuration comporte l'activation des services et/ou la transmission de données comporte une seule fois ou périodiquement la transmission des données de service.

5. Procédé selon l'une quelconque des revendications 3 à 4, **caractérisé en ce que** les options de configuration sont liées hiérarchiquement et, après la sélection d'une option de configuration d'un niveau supérieur, sont affichées les options de configuration de niveaux immédiatement inférieurs reliées à cette option de configuration.

6. Procédé selon l'une quelconque des revendications 1 à 5, **caractérisé en ce qu'**uniquement une quantité partielle des options de configuration est représentée simultanément sur l'affichage du téléphone mobile et l'utilisateur peut faire défiler cette quantité partielle par des instructions de défilement.

7. Procédé selon l'une quelconque des revendications 1 à 6, **caractérisé en ce que** les options de configuration sont représentées en tant que surfaces de sélection sur l'affichage et/ou en tant que champ de saisie pour des entrées de l'utilisateur.
